# EUROPEAN PATENT SPECIFICATION

(11) **EP 1 803 575 B1**
(45) Date of publication and mention of the grant of the patent: **23.09.2015**
(21) Application number: 06022521.6
(22) Date of filing: 27.10.2006
(51) Int. Cl.: B41J 15/04, B41J 3/407, C09J 7/02

(54) **Print tape and print cassette**
Druckband und Druckbandkassette
Ruban à imprimer et cassette pour bande

(30) Priority: 28.12.2005 JP 2005377316; 28.12.2005 JP 2005377318
(43) Date of publication of application: 04.07.2007
(60) Divisional application: 15180081.0
(73) Proprietor: BROTHER KOGYO KABUSHIKI KAISHA, Nagoya-shi, Aichi-ken 467-8561 (JP)
(72) Inventor: Hioki, Hitomi, Nagoya-shi Aichi-ken 467-8562 (JP); Ohta, Kiyoichi, Nagoya-shi Aichi-ken 467-8562 (JP)
(74) Representative: Hofer, Dorothea

(56) References cited:
- EP-A1- 0 644 058
- EP-A2- 0 470 648
- WO-A-00/34405
- JP-A- 8 058 211
- US-A- 4 968 562

## Description

### BACKGROUND OF THE INVENTION

### 1. Field of the Invention

The present invention relates to a print tape having an adhesive layer, and a print cassette in which the print tape in a wound state is installed.

### 2. Description of Related Art

Conventionally, a tape printer in which a print cassette is set has been used to produce a character-printed tape by printing on a print tape (see Japanese Patent Application laid-open No. H8(1996)-58211 forming the basis for the preamble of claim 1). The produced character-printed tape, from which a release paper is removed so that an adhesive surface is exposed, can be adhered to an adherend.

However, in the case where the adherend is a picture or a copper plate, the adherend gets damaged on a part being in contact with the adhesive surface of the character-printed tape, after a short period has passed since the character-printed tape is stuck to the adherend.

### SUMMARY OF THE INVENTION

The present invention has been made in view of the above circumstances and has an object to overcome the above problems and to provide a print tape which is provided with a corrosion control against an adherend, and a print cassette in which the print tape in a wound state is installed.

To achieve the above object, there is provided a print tape as is defined in claim 1.

In the present invention, the print tape, from which the release paper is removed so that the second-sided adhesive layer is exposed, can be adhered to the adherend. The second-sided adhesive layer which is brought into close contact with the adherend is formed with the acid-free second-sided adhesive (containing no unsaturated carboxylic acid), thereby preventing the corrosion on the adhered surface of the adherend to which the print tape is stuck.

Herein, the "second-sided adhesive" includes a copolymer as a main material, made by the copolymerization of monomers of any series such as an acrylic series, a rubber series and a silicone series. The second-sided adhesive can be made with various kinds of additives (such as a crosslinking agent, a tackifier, a softner, a fixture and a pigment).

"Acid-free" refers to a state that no unsaturated carboxylic acid (such as an acrylic acid, a methacrylic acid, an itaconic acid and a maleic acid) is used.

Therefore, "the acid-free second-sided adhesive" is an adhesive which is produced by using monomers including no unsaturated carboxylic acid, or an adhesive which is produced by using monomers including no unsaturated carboxylic acid and additives including no unsaturated carboxylic acid.

Further developments of the present invention are given in the dependent claims.

### BRIEF DESCRIPTION OF THE DRAWINGS

Fig. 1 is a cross-sectional view of a print tape taken along a line A-A shown in Fig. 3;
Fig. 2 is a perspective view of a print cassette;
Fig. 3 is a plan view of the print cassette from which an upper cassette case is removed;
Fig. 4 is a schematic view showing a process of a double-sided adhesive tape, a laminate film and an ink ribbon being guided on a lower cassette case;
Fig. 5 shows a principle of a measurement to measure a creep adhesion force against a PET film, using a measuring apparatus, "AUTOGRAPH AGS-50ND" manufactured by Shimadzu Corporation;
Fig. 6 is a schematic view of a method to measure a squeezed adhesive width;
Fig. 7 is a table showing measurement results of the print tape;
Fig. 8 is a cross-sectional view of a character-printed tape (print tape) taken along a line B-B shown in Fig. 10;
Fig. 9 is a perspective view of a print cassette;
Fig. 10 is a plan view of the print cassette from which an upper cassette case is removed;
Fig. 11 is a schematic view showing a process of the print tape and an ink ribbon being guided on a lower cassette case;
Fig. 12 is a schematic view of a method to measure a squeezed adhesive width;
Fig. 13 is a table showing measurement results of the print tape;
Fig. 14 is a cross-sectional view of a print tape taken along a line C-C shown in Fig. 16;
Fig. 15 is a perspective view of a print cassette; and
Fig. 16 is a plan view of the print cassette from which an upper cassette case is removed.

### DETAILED DESCRIPTION OF THE PREFERRED EMBODIMENTS

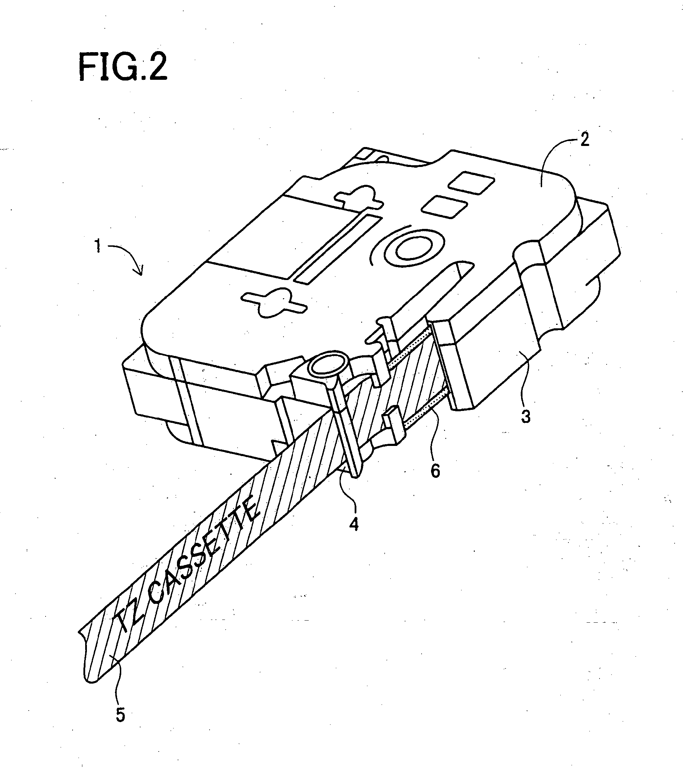

A detailed description of a first preferred embodiment of a print cassette embodying the present invention will now be given referring to the accompanying drawings. Fig. 2 is a perspective view of a print cassette. As shown in Fig. 2, a print cassette 1 of the first embodiment comprises an upper cassette case 2 and a lower cassette case 3. A print tape 5 (a character-printed tape) is discharged from the print cassette 1 through a tape discharging part 4. It is noted that a reference numeral 6 indicates an ink ribbon.

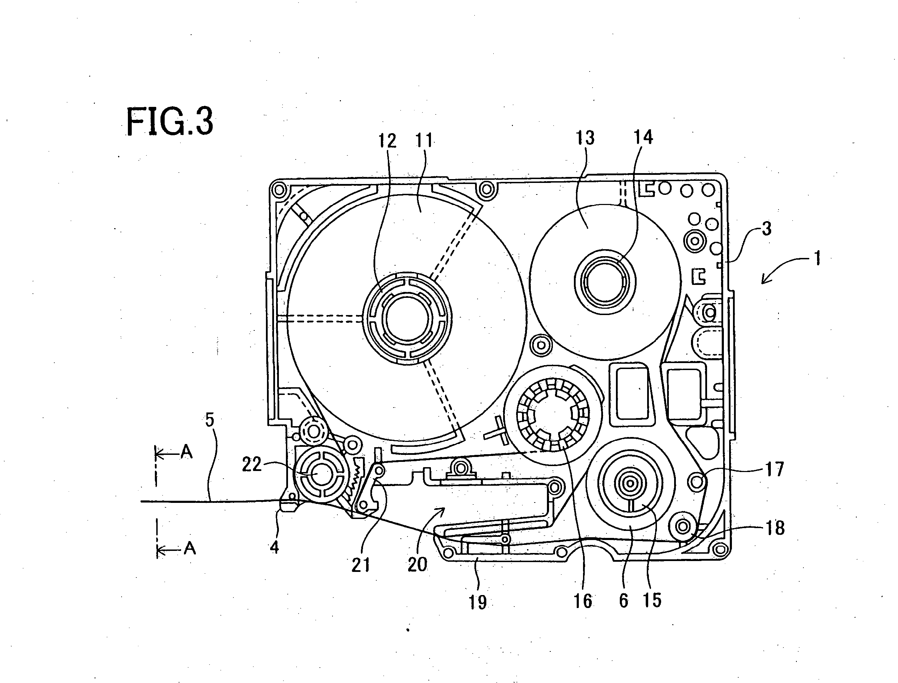

Fig. 3 is a plan view of the print cassette 1 from which the upper cassette case 2 (see Fig. 2) is removed. As shown in Fig. 3, a tape spool 12 on which a double-sided adhesive tape 11 is wound, a film spool 14 on which a laminate film 13 is wound, a ribbon supply spool 15 on which an ink ribbon 6 is wound, and a ribbon take-up spool 16 are provided on the lower cassette case 3 of the print cassette 1, being rotatable with cooperation of respective spool support members (not shown) formed on the upper cassette case 2 (see Fig. 2).

The laminate film 13 is a film tape made of polyethylene terephthalate (hereinafter, referred to as "PET"). Printing will be performed on an inward surface of the laminate film 13 wound on the film spool 14. Therefore, the laminate film 13 wound on the film spool 14 is guided to an arm part 19 formed on the lower cassette case 3, via a guide pin 17 provided on the lower cassette case 3 in an upright position and a rotatable guide roller 18. The laminate film 13 is further guided out of the arm part 19, being exposed outside a thermal head attachment space 20. After that, the laminate film 13 is discharged from the tape cassette 1 through the tape discharging part 4, via a guide member 21 and a feed roller 22.

The ink ribbon 6 is wound on the ribbon supply spool 15 with an ink-coated surface facing in an inward direction. The ink ribbon 6 wound on the ribbon supply spool 15 in this way is exposed out of the arm part 19 outside the thermal head attachment space 20. The ink ribbon 6 is further guided while the ink-coated surface and the printing surface of the laminate film 13 are overlapped each other. After that, the ink ribbon 6 is guided along an exterior of the guide member 21, thereby getting separated from the printing surface of the laminate film 13. Finally, the ink ribbon 6 is taken up by the ribbon take-up spool 16.

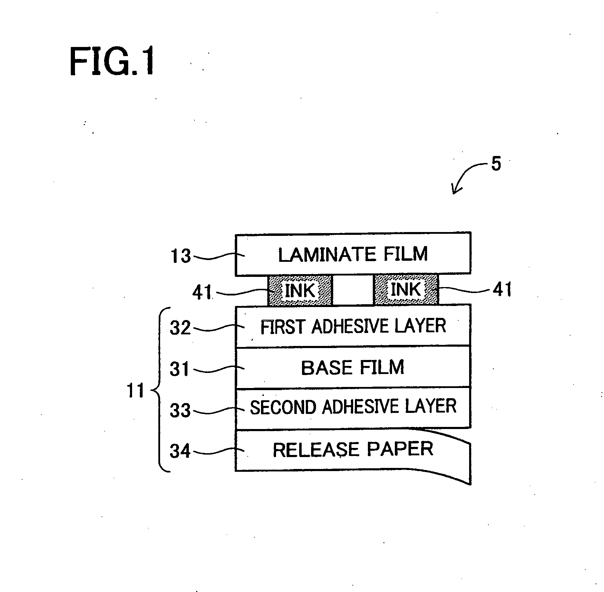

The double-sided adhesive tape 11 has a first-sided adhesive layer which is formed with a first-sided adhesive coating a first side (an upper side in Fig. 1) of a base film made of the PET. The double-sided adhesive tape 11 also has a second-sided adhesive layer which is formed with a second-sided adhesive coating a second side (a lower side in Fig. 1) of the base film, to which a release paper is adhered. The double-sided adhesive tape 11 is wound on the tape spool 12 with the release paper outside. The double-sided adhesive tape 11 wound on the tape spool 12 in this way is guided by the feed roller 22 while the adhesive-coated surface of the first-sided adhesive layer and the printing surface of the laminate film 13 are overlapped each other. As a result, the double-sided adhesive tape 11 is adhered to the laminate film 13, and discharged from the print cassette 1 through the tape discharging part 4.

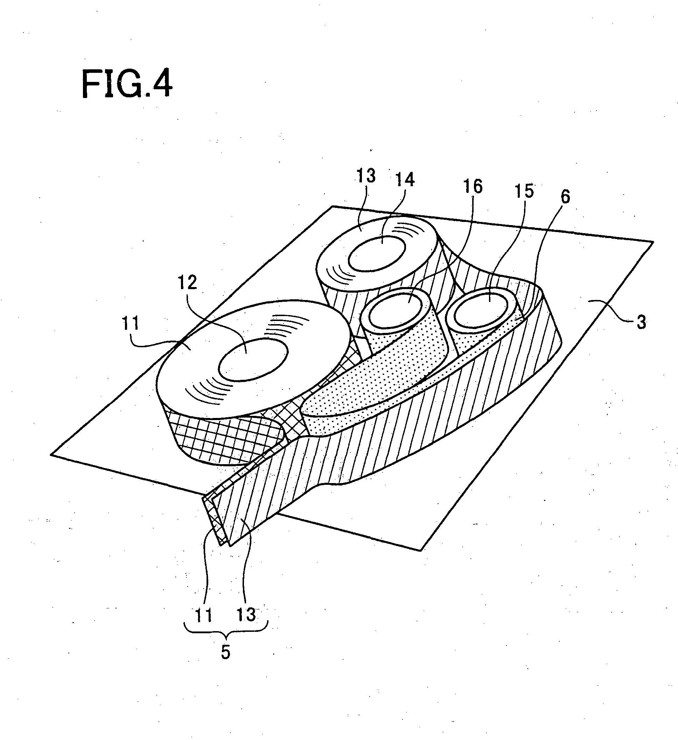

Accordingly, the print tape 5, which is composed of the laminate film 13 and the double-sided adhesive tape 11, is discharged from the print cassette 1 through the tape discharging part 4. Fig. 4 is a schematic view showing a process of the double-sided adhesive tape 11, the laminate film 13 and the ink ribbon 3 being guided as described above.

Fig. 1 is a cross-sectional view of the print tape 5 taken along a line A-A shown in Fig. 3. As shown in Fig. 1, the print tape 5 is composed of the laminate film 13 and the double-sided adhesive tape 11. The double-sided adhesive tape 11 comprises a first-sided adhesive layer 32 which is formed with the first-sided adhesive coating the first side (the upper side in Fig. 1) of a base film 31 made of the PET. The double-sided adhesive tape 11 also comprises a second-sided adhesive layer 33 which is formed with the second-sided adhesive coating the second side (the lower side in Fig. 1) of the base film 31, to which a release paper 34 is adhered. The printing surface of the laminate film 13 on which ink 41 is put and the first-sided adhesive layer 32 are overlapped each other, so that the laminate film 13 is stuck to the double-sided adhesive tape 11 to compose the print tape 5.

Further, the print tape 5, from which the release paper 34 is removed so that the second-sided adhesive layer 33 is exposed, can be adhered to the adherend.

Noted that the second-sided adhesive making up the second-sided adhesive layer 33 includes a copolymer as a main material, made by the copolymerization of monomers of any series such as an acrylic series, a rubber series and a silicone series. The second-sided adhesive can be made with or without various kinds of additives (such as a crosslinking agent, a tackifier, a softner, a fixture and a pigment). However, the second-sided adhesive, of which the copolymer and the additives contain no unsaturated carboxylic acid (such as an acrylic acid, a methacrylic acid, an itaconic acid and a maleic acid), is adopted (hereinafter, referred to as an "acid-free" adhesive).

On the other hand, the same adhesive as the second-sided adhesive described above can be used as the first-sided adhesive making up the first-sided adhesive layer 32, but any other adhesive (an adhesive other than acid-free adhesive, such as the adhesive containing the unsaturated carboxylic acid) can be also used.

Incidentally, the print cassette 1 is set in a cassette mount of a tape printer (not shown) to produce the character-printed tape (the print tape 5 on which characters are printed on a printing surface). In the cassette mount of the tape printer, there is provided a cutter device (not shown) having a cutter to cut the character-printed tape discharged from the print cassette 1 through the tape discharging part 4. The structure of the print cassette 1 as explained with reference to Fig. 2 and the tape printer in which the print cassette 1 is installed to produce the character-printed tape have been publicly known, so the detailed explanation of the process for producing the character printed tape with the print cassette 1 and the tape printer is omitted.

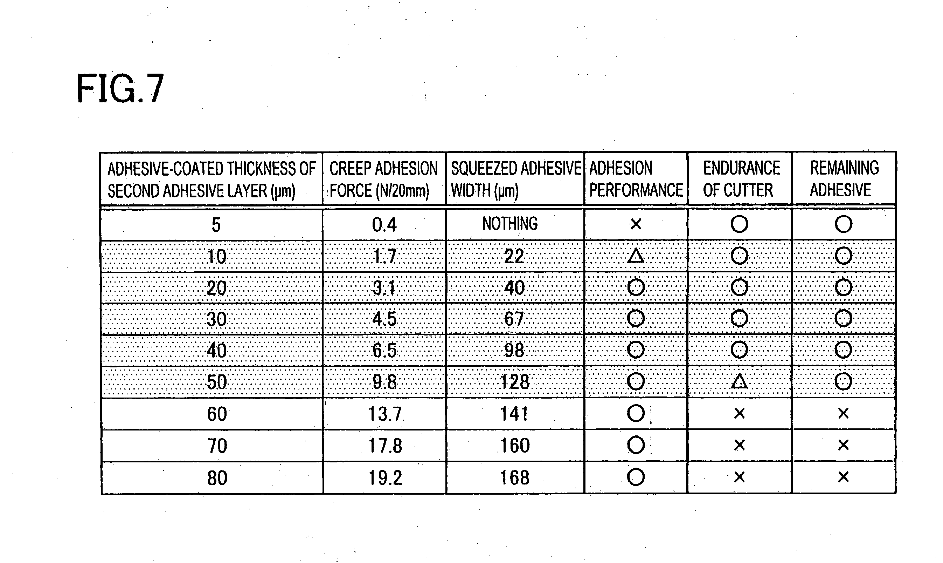

Next, the print tapes 5 having various adhesive-coated thicknesses of the second-sided adhesive layer 33 of the double-sided adhesive tape 11 (nine thicknesses in total, 5, 10, 20, 30, 40, 50, 60, 70, 80 µm) are prepared to be tested for an interrelationship of measuring items, which are a creep adhesion force against the PET film, a squeezed adhesive width, an adhesion performance, an endurance of cutter and a remaining adhesive. Fig. 7 is a table showing the measurement results of the measuring items.

In the measurement, each adhesive-coated thickness of the first-sided adhesive layer 32 of the double-sided adhesive tape 11 is arranged to be same as that of the second-sided adhesive layer 33.

The measuring items will be explained below.

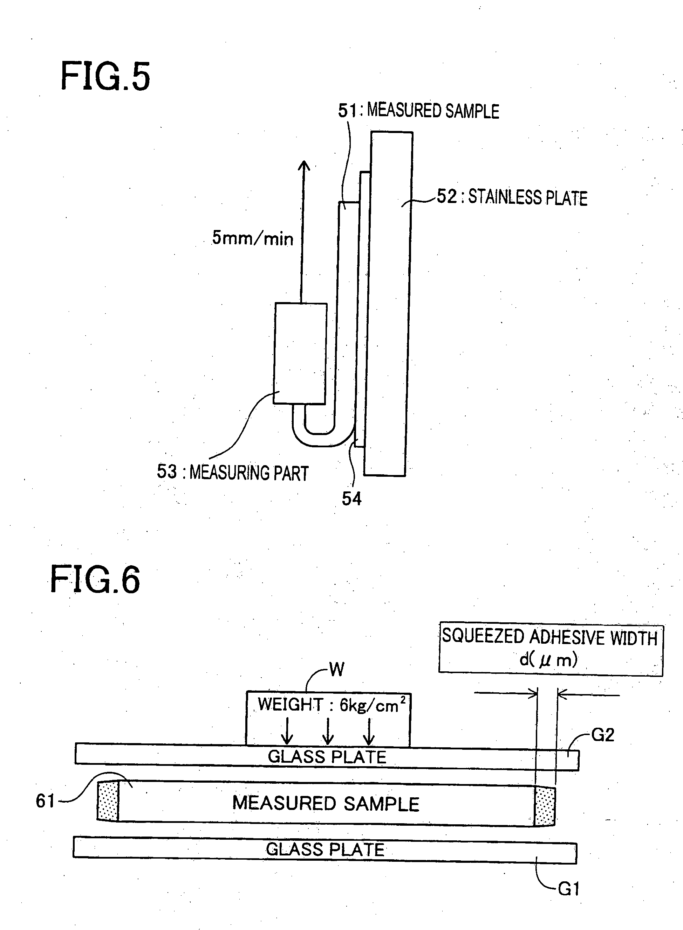

The creep adhesion force against the PET film is a resistance force which is measured in the process as below, using a measuring apparatus, "AUTOGRAPH AGS-50ND" manufactured by Shimadzu Corporation. Fig. 5 shows a principle of a measurement to measure the creep adhesion force against the PET film. The creep adhesion force against the PET film is measured by the following process:
(1) A measured sample 51, which is the print tape 5 being cut into a size of 20 mm in width × 160 mm in length, is prepared.
(2) The print tape 5 as the measured sample 51, from which the release paper 34 is removed, is set on a PET film 54, with the adhesive-coated surface of the second-sided adhesive layer 33 being aligned with the PET film 54. The measured sample 51 is stuck to the PET film 54, by being pressed by a rubber roller of 2 kg rolling over a surface of the measured sample 51 back and forth.
(3) The measured sample 51 stuck to the PET film 54 is fixed to a stainless plate 52 so that the longitudinal direction of the measured sample 51 can be along the vertical direction.
(4) A measuring part 53, on which a lower end of the measured sample 51 in a vertical position is hung, is moved upward along the stainless plate 52 slowly at a speed of 5 mm/min, thereby peeling off the measured sample 51 in a direction of 180 degrees.
(5) The measuring part 53 measures the resistance force (N/20 mm) of the measured sample 51 while the measured sample 51 is peeled off in the direction of 180 degrees, as a creep adhesion force against the PET film of the second-sided adhesive layer 33.

The squeezed adhesive width, which is measured by a method as shown schematically in Fig. 6, is a width of the adhesive squeezed out from an edge of the print tape 5. More specifically, for the measurement of the squeezed adhesive width, a measured sample 61, which is the print tape 5 being cut into a size of 12 mm × 15 mm, is prepared. The print tape 5 as the measured sample 61, from which the release paper 34 is removed, is set on a lower glass plate G1 with the adhesive-coated surface of the second-sided adhesive layer 33 being down. An upper glass plate G2 is set on a top surface of the measured sample 61. On the upper glass plate G2, a weight W is placed so that a load on the measured sample 61 becomes 6kg/cm². The measured sample 61, the upper/lower glass plates G2, G1 and the weight W are left at rest on a constant temperature oven under a constant temperature of 55°C for 24 hours. After that, the squeezed adhesive width d (µm) corresponding to the width of the adhesive squeezed out from the edge of the measured sample 61 is examined under a microscope.

The adhesion performance is determined by the following method. A measured sample is the print tape 5 being cut into a size of 12 mm in width × 100 mm in length. The print tape 5 as the measured sample, from which the release paper 34 is removed, is stuck to an embossed polypropylene plate, with the adhesive-coated surface of the second-sided adhesive layer 33 being aligned with the polypropylene plate, and then the state thereof after the expiration of one week is examined. The case where there is no lifting of the print tape 5 from the polypropylene plate is determined as "good" (O). The case where the lifting height of the print tape 5 from the polypropylene plate is less than 10 mm is determined as "satisfactory" (Δ). The case where the lifting height of the print tape 5 from the polypropylene plate is equal to or more than 10 mm is determined as "unsatisfactory" (×).

The endurance of cutter is determined by the following method. The print tape 5 of 12 mm in width, which is discharged from the tape cassette 1, is cut by the length of 20 mm by the cutter device repeatedly. When the number of continuous cuts has reached 1000 times, the width of the adhesive adhered to the cutter of the cutter device is measured by a scale from the edge of the cutter. The case where the adhesive width is less than 1 mm is determined as "good" (○). The case where the adhesive width is equal to or more than 1 mm and less than 1.5 mm is determined as "satisfactory" (Δ). The case where the adhesive width is equal to or more than 1.5 mm is determined as "unsatisfactory" (×).

The remaining adhesive is measured by the following method. A measured sample is the print tape 5 being cut into a size of 12 mm in width × 100 mm in length. The print tape 5 as the measured sample, from which the release paper 34 is removed, is stuck to a stainless plate with the adhesive-coated surface of the second-sided adhesive layer 33 being aligned with the stainless plate. After the lapse of 24 hours, the measured sample is peeled off the stainless plate, and whether the adhesive remains on the stainless plate or not is visually checked. The case where the no adhesive remains on the stainless plate is determined as "good" (○). The case where the adhesive remains on the stainless plated is determined as "unsatisfactory" (×).

Herein, the interrelationship of measuring items, which are the creep adhesion force against the PET film, the squeezed adhesive width, the adhesion performance, the endurance of cutter and the remaining adhesive, will be discussed with reference to Fig. 7.

According to a table showing a measurement results in Fig. 7, the print tapes which are determined as "good" (○) or "satisfactory" (Δ) in the adhesion performance, the endurance of cutter and remaining adhesive are supposed to be within a range of 1 to 10 N/20mm of the creep adhesion force of the second-sided adhesive layer 33 against the PET film, and within a range of 10 to 50 µm of the adhesive-coated thicknesses of the second-sided adhesive layer 33, and less than 130 µm in the squeezed adhesive width.

In terms of the endurance of cutter only, when the adhesive-coated thickness of the second-sided adhesive layer 33 is 50 µm, the squeezed adhesive width can be kept less than 130 µm, and the endurance of cutter is determined as "satisfactory" (Δ). From this result, it can be said that the cutter device mentioned above can be used. Further, when the adhesive-coated thickness of the second-sided adhesive layer 33 is arranged to be less than or equal to 40 µm, the squeezed adhesive width can be kept less than 100 µm, and the endurance of cutter is determined as "good" (○). Under this condition, the endurance of the cutter device can be improved.

In terms of the creep adhesion force of the second-sided adhesive layer 33 against the PET film, the print tape, of which the creep adhesion force of the second-sided adhesive layer 33 against the PET film is over 10 N/20mm, sustains a cohesive failure on the second-sided adhesive layer 33. Therefore, there is the adhesive (remaining adhesive) left on the stainless plate as the adherend, and the measuring item of the remaining adhesive is determined as "unsatisfactory" (×). Further, there is the adhesive of 1. 5 mm or more in width left on the cutter of the cutter device, the measuring item of the endurance of cutter is also determined as "unsatisfactory" (×).

Preferably, the creep adhesion force of the second-sided adhesive layer 33 against the PET film is less than or equal to the creep adhesion force of the first-sided adhesive layer 32 against the PET film, in order that the laminate film 13 is prevented from being peeled away alone when print tape 5 is peeled off the adherend. This force relation can be easily achieved by the use of the acid-free adhesive as the second-sided adhesive forming the second-sided adhesive layer 33, and the acid adhesive as the first-sided adhesive forming the first-sided adhesive layer 32.

As described in detail above, in the print cassette 1 of the first embodiment, the laminate film 13 and the double-sided adhesive tape 11 in a wound state are provided, as shown in Figs. 3 and 4. Further as shown in Fig. 1, the laminate film 13 is adhered to the first side of the base film 31 of the double-sided adhesive tape 11 to which the first-sided adhesive layer 32 is applied. The print tape 5, from which the release paper 34 is removed so that the second-sided adhesive layer 33 is exposed can be adhered to the adherend. Regarding this point, the second-sided adhesive layer 33 which is brought into close contact with the adherend is made of the acid-free (containing no unsaturated carboxylic acid), thereby preventing the corrosion on the adhered surface of the adherend such as pictures and copper plates to which the print tape 5 is stuck.

Upper and lower surfaces of the first-sided adhesive layer 32 are covered by the laminate film 13 and the base film 31 of the PET respectively. Therefore, if the first-sided adhesive layer 32 is made of the acid-added adhesive, the acid of the adhesive has no effect on the adherend. Accordingly, the first-sided adhesive of the first-sided adhesive layer 32 can be made of various kinds of the adhesive, which reduces restrictions on manufacturing. The adhesive which can enhance the adhesion between the laminate film 13 and the base film 31 can be adopted, which improves the quality of the print tape 5.

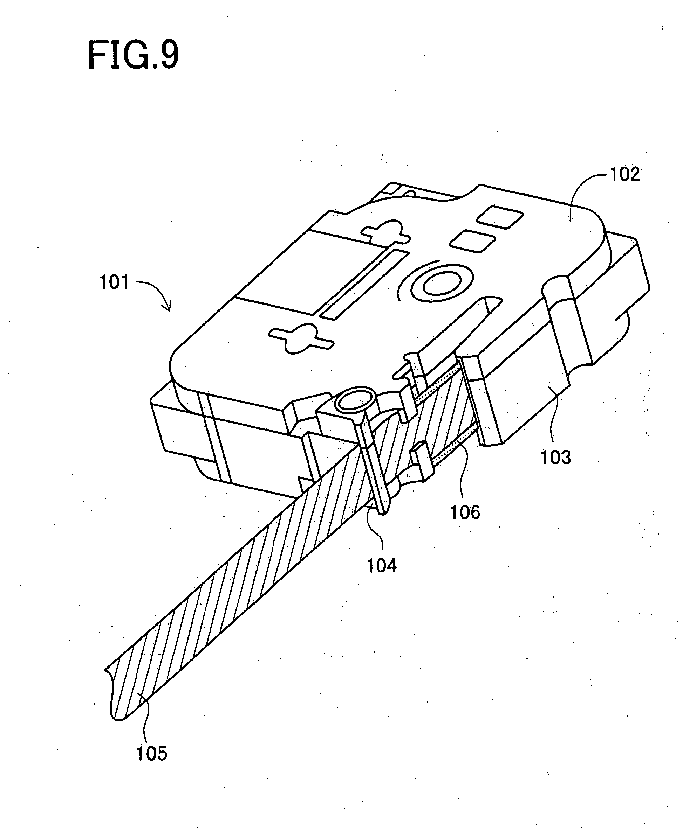

Next, a detailed description of a second preferred embodiment of a print cassette embodying the present invention will now be given referring to the accompanying drawings. Fig. 9 is a perspective view of a print cassette. As shown in Fig. 9, a receptor-type print cassette 101 of the second embodiment comprises an upper cassette case 102 and a lower cassette case 103. A print tape 105 (a character-printed tape) is discharged from the print cassette 101 through a tape discharging part 104. It is noted that a reference numeral 106 indicates an ink ribbon.

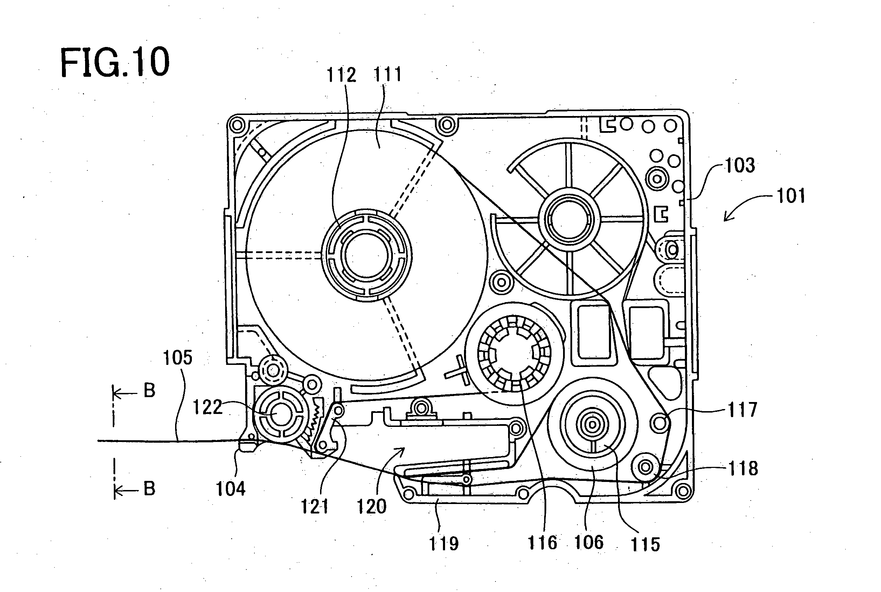

Fig. 10 is a plan view of the print cassette 101 from which the upper cassette case 102 (see Fig. 9) is removed. As shown in Fig. 10, a tape spool 112 on which a print tape 111 is wound, a ribbon supply spool 115 on which an ink ribbon 106 is wound, and a ribbon take-up spool 116 are provided on the lower cassette case 103 of the print cassette 101, being rotatable with cooperation of respective spool support members (not shown) formed on the upper cassette case 102 (see Fig. 9).

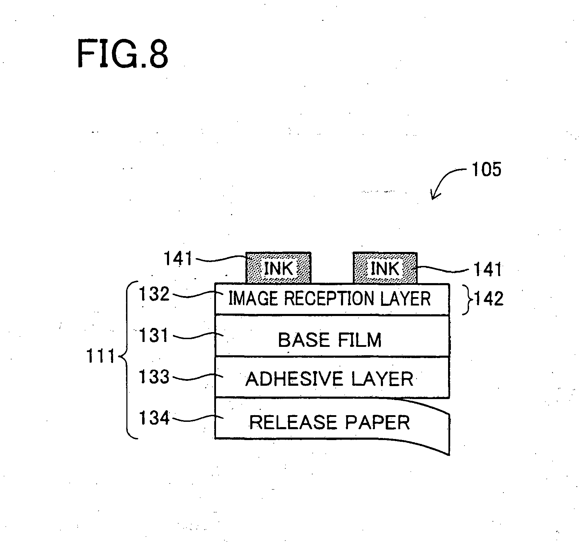

The print tape 111 has an image reception layer forming a printing surface on a first side (an upper side in Fig. 8) of a base film made of the PET. The print tape 111 also has an adhesive layer which is formed with an adhesive coating a second side (a lower side in Fig. 8) of the base film, to which a release paper is adhered. The print tape 111 is wound on the tape spool 112 with the image reception layer (printing surface) inside, and the release paper outside.

The print tape 111 wound on the tape spool 112 is guided to an arm part 119 formed on the lower cassette case 103, via a guide pin 117 provided on the lower cassette case 103 in an upright position and a rotatable guide roller 118. The print tape 111 is further guided out of the arm part 119, being exposed outside a thermal head attachment space 120. After that, the print tape 111 is discharged from the print cassette 101 through the tape discharging part 104, via a guide member 121 and a feed roller 122.

The ink ribbon 106 is wound on the ribbon supply spool 115 with an ink-coated surface facing in an inward direction. The ink ribbon 106 wound on the ribbon supply spool 115 in this way is exposed out of the arm part 119 outside the thermal head attachment space 120. The ink ribbon 106 is further guided while the ink-coated surface and the image reception layer (printing surface) of the print tape 111 are overlapped each other. After that, the ink ribbon 106 is guided along an exterior of the guide member 121, thereby getting separated from the image reception layer (printing surface) of the print tape 111. Finally, the ink ribbon 106 is taken up by the ribbon take-up spool 116.

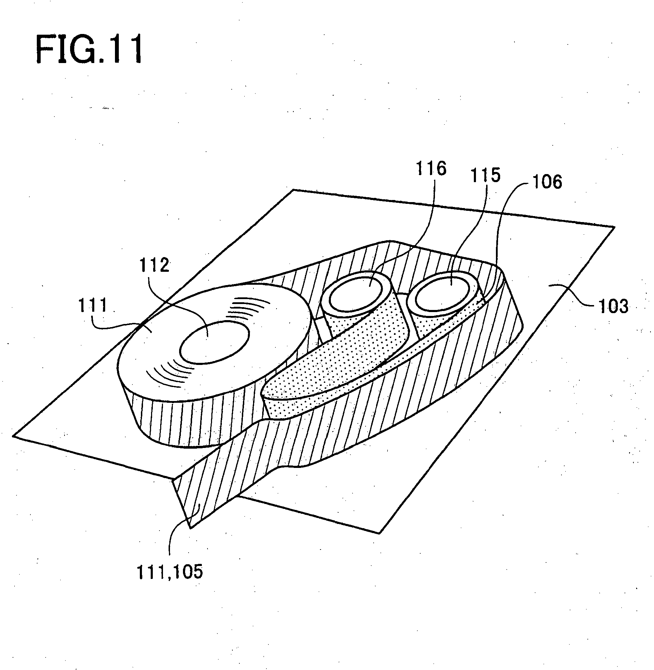

Accordingly, the print tape 105, which is the print tape 111 on which printing is performed on the image reception layer (printing surface), is discharged from the print cassette 101 through the tape discharging part 104. Hereinafter, to be distinguished from the print tape 111, the print tape 105 will be referred to as a character-printed tape 105. Fig. 11 is a schematic view showing a process of the print tape 111 and the ink ribbon 106 being guided as described above.

Fig. 8 is a cross-sectional view of the character-printed tape 105 taken along a line B-B shown in Fig. 10. As shown in Fig. 8, the character-printed tape 105 is composed of the print tape 111. The print tape 111 comprises an image reception layer 132 forming the printing surface on the first side (the upper side in Fig. 8) of a base film 131 made of the PET. The print tape 111 also comprises an adhesive layer 133 which is formed with the adhesive coating the second side (the lower side in Fig. 8) of the base film 131, to which a release paper 134 is adhered. Ink 141 is put on the image reception layer 132, so that the print tape 105 is produced. At the same time, the image reception layer 132 composes a printing layer 142. Further, the print tape 105 can be stuck to an adherend with the adhesive-coated surface of the adhesive layer 133 which is exposed after the release paper 134 is removed.

Noted that the adhesive making up the adhesive layer 133 includes a copolymer as a main material, made by the copolymerization of monomers of any series such as an acrylic series, a rubber series and a silicone series. The adhesive can be made with or without various kinds of additives (such as a crosslinking agent, a tackifier, a softner, a fixture and a pigment). However, the adhesive, of which the copolymer and the additives contain no unsaturated carboxylic acid (such as an acrylic acid, a methacrylic acid, an itaconic acid and a maleic acid), is adopted (hereinafter, referred to as an "acid-free" adhesive).

Incidentally, the print cassette 101 is set in a cassette mount of a tape printer (not shown) to produce the character-printed tape 105 (the print tape 111 on which characters are printed on the image reception layer 132 with the ink 141). In the cassette mount of the tape printer, there is provided a cutter device (not shown) having a cutter to cut the character-printed tape 105 discharged from the print cassette 101 through the tape discharging part 104. The structure of the print cassette 101 as explained with reference to Fig. 9 and the tape printer in which the print cassette 101 is installed to produce the character-printed tape 105 have been publicly known, so the detailed explanation of the process for producing the character-printed tape 105 with the print cassette 101 and the tape printer is omitted.

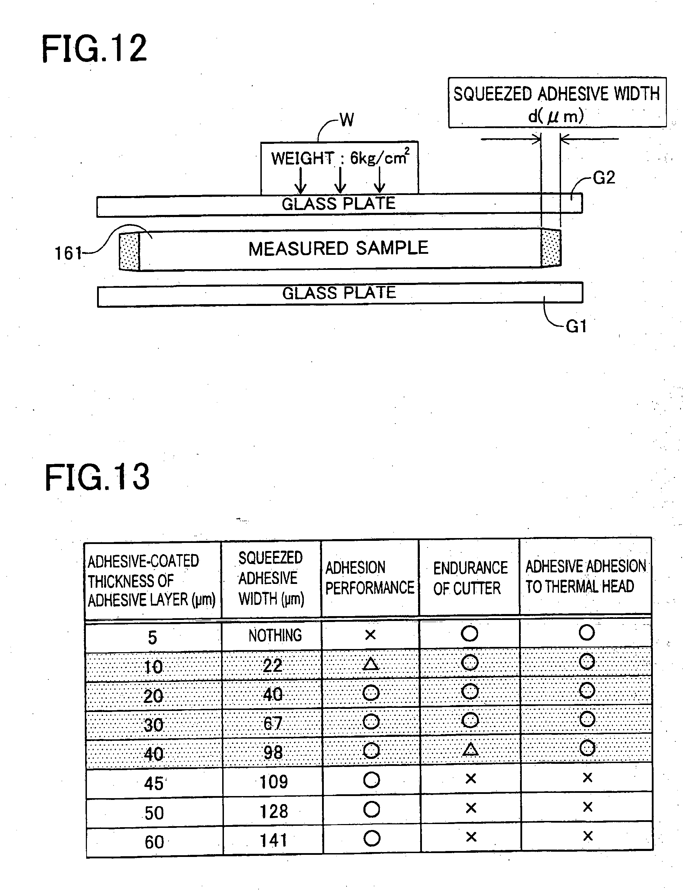

Next, the print tapes 111 having various adhesive-coated thicknesses of the adhesive layer 133 (eight thicknesses in total, 5, 10, 20, 30, 40, 45, 50, 60 µm) are prepared to be tested for an interrelationship of measuring items, which are a squeezed adhesive width, an adhesion performance, an endurance of cutter and an adhesive adhesion to the thermal head. Fig. 13 is a table showing the measurement results of the measuring items.

The squeezed adhesive width, which is measured by a method as shown schematically in Fig. 12, is a width of the adhesive squeezed out from an edge of the print tape 111. More specifically, for the measurement of the squeezed adhesive width, a measured sample 161, which is the print tape 111 being cut into a size of 12 mm × 15 mm, is prepared. The print tape 111 as the measured sample 161, from which the release paper 134 is removed, is set on a lower glass plate G1 with the adhesive-coated surface of the adhesive layer 133 being down. An upper glass plate G2 is set on a top surface of the measured sample 161. On the upper glass plate G2, a weight W is placed so that a load on the measured sample 161 becomes 6kg/cm². The measured sample 161, the upper/lower glass plates G2, G1 and the weight W are left at rest on a constant temperature oven under a constant temperature of 55°C for 24 hours. After that, the squeezed adhesive width d (µm) corresponding to the width of the adhesive squeezed out from the edge of the measured sample 161 is examined under a microscope.

The adhesion performance is determined by the following method. A measured sample is the print tape 111 being cut into a size of 12 mm in width × 100 mm in length. The print tape 111 as the measured sample, from which the release paper 134 is removed, is stuck to an embossed polypropylene plate, with the adhesive-coated surface of the adhesive layer 133 being aligned with the polypropylene plate, and then the state thereof after the expiration of one week is examined. The case where there is no lifting of the print tape 111 from the polypropylene plate is determined as "good" (○). The case where the lifting height of the print tape 111 from the polypropylene plate is less than 10 mm is determined as "satisfactory" (Δ). The case where the lifting height of the print tape 111 from the polypropylene plate is equal to or more than 10 mm is determined as "unsatisfactory" (×).

The endurance of cutter is determined by the following method. The print tape 111 of 12 mm in width, which is discharged from the print cassette 101, is cut by the length of 20 mm by the cutter device repeatedly. When the number of continuous cuts has reached 1000 times, the width of the adhesive adhered to the cutter of the cutter device is measured by a scale from the edge of the cutter. The case where the adhesive width is less than 1 mm is determined as "good" (○). The case where the adhesive width is equal to or more than 1 mm and less than 1.5 mm is determined as "satisfactory" (Δ). The case where the adhesive width is equal to or more than 1.5 mm is determined as "unsatisfactory" (×).

The adhesive adhesion to the thermal head is measured by the following method. The print cassette 101 from which the print tape 111 of 12 mm in width × 8 m in length is discharged is set in the tape printer, and continuous printing is performed to the end of the print tape 111. After that, another print cassette 101 from which the print tape 111 of 18 mm in width is discharged is set in the tape printer, and printing is performed on the print tape 111 for the length of 50 mm. During the printing on the print tape 111 having the width of 18 mm for the length of 50 mm, the case where nothing is wrong in a tape feeding is determined as "good" (○). The case where anything is wrong in the tape feeding is determined as "unsatisfactory" (×).

Herein, the interrelationship of measuring items, which are the squeezed adhesive width, the adhesion performance, the endurance of cutter and the remaining adhesive on the thermal head, will be discussed with reference to Fig. 13.

According to a table showing a measurement results in Fig. 13, the print tapes which are determined as "good" (○) or "satisfactory" (Δ) in the adhesion performance, the endurance of cutter and the adhesive adhesion to the thermal head are supposed to be within a range of 10 to 40 µm of the adhesive-coated thicknesses of the adhesive layer 133, and less than 100 µm in the squeezed adhesive width.

In terms of the endurance of cutter only, when the adhesive-coated thickness of the adhesive layer 133 is 40 µm, the squeezed adhesive width can be kept less than 100 µm, and the endurance of cutter is determined as "satisfactory" (Δ). From this result, it can be said that the cutter device mentioned above can be used. Further, when the adhesive-coated thickness of the adhesive layer 133 is arranged to be less than or equal to 30 µm, the squeezed adhesive width can be kept less than 90 µm, and the endurance of cutter is determined as "good" (○). Under this condition, the endurance of the cutter device can be improved.

As described in detail above, in the print cassette 101 of the second embodiment, the print tape 111 in a wound state is provided as shown in Figs. 10 and 11. The print tape 111, from which the release paper 134 is removed so that the adhesive layer 133 is exposed can be adhered to the adherend as shown in Fig. 8. Regarding this point, the adhesive layer 133 which is brought into close contact with the adherend is made of the acid-free (containing no unsaturated carboxylic acid), thereby preventing the corrosion on the adhered surface of the adherend such as pictures and copper plates to which the print tape 111 is stuck.

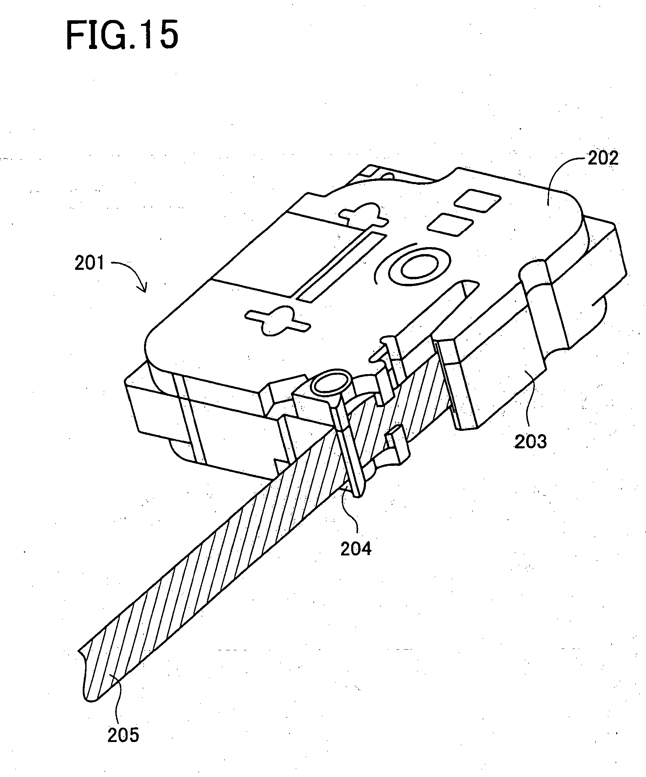

Next, a detailed description of a third preferred embodiment of a print cassette embodying the present invention will now be given referring to the accompanying drawings. Fig. 15 is a perspective view of a print cassette. As shown in Fig. 15, a heat-sensitive-type print cassette 201 of the third embodiment comprises an upper cassette case 202 and a lower cassette case 203. A print tape 205 is discharged from the print cassette 201 through a tape discharging part 204.

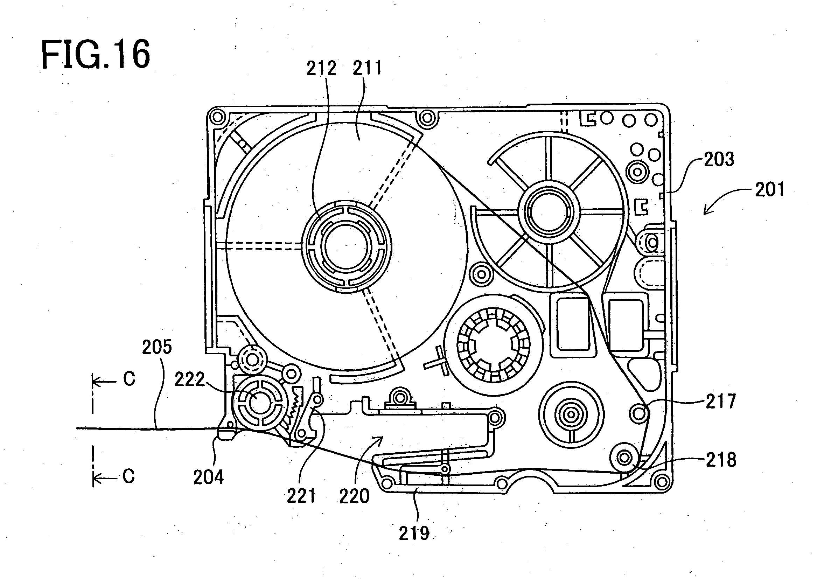

Fig. 16 is a plan view of the print cassette 201 from which the upper cassette case 202 (see Fig. 15) is removed. As shown in Fig. 16, a tape spool 212 on which a print tape 211 in the wound state is provided on the lower cassette case 203 of the print cassette 201, being rotatable with cooperation of a spool support member (not shown) formed on the upper cassette case 202 (see Fig. 15).

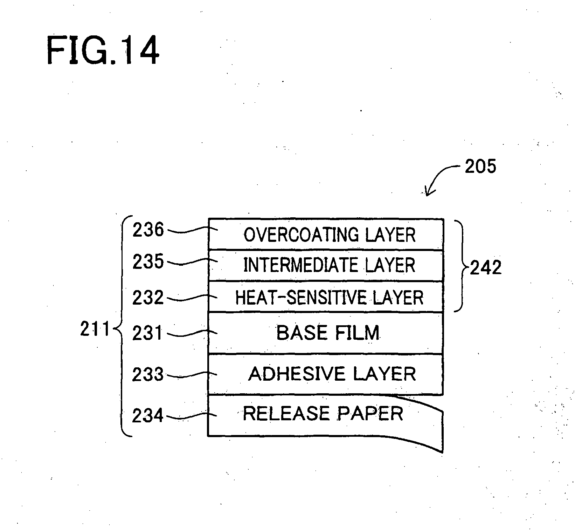

The print tape 211 has a heat-sensitive layer forming a printing surface on a first side (an upper side in Fig. 14) of a base film made of the PET, and an overcoating layer on a first side (the upper side in Fig. 14) of a heat-sensitive layer, over an intermediate layer which is interposed between the overcoating layer and the heat-sensitive layer. The print tape 211 also has an adhesive layer which is formed with an adhesive coating a second side (a lower side in Fig. 14) surface of the base film, to which a release paper is adhered. The print tape 211 is wound on the tape spool 212 with the overcoating layer inside, and the release paper outside.

The print tape 211 wound on the tape spool 212 is guided to an arm part 219 formed on the lower cassette case 203, via a guide pin 217 provided on the lower cassette case 203 in an upright position and a rotatable guide roller 218. The print tape 211 is further guided out of the arm part 219, being exposed outside a thermal head attachment space 220. After that, the print tape 211 is discharged from the tape cassette 201 through the tape discharging part 204, via a guide member 221 and a feed roller 222.

Accordingly, the print tape 205, which is the print tape 211 on which characters are generated on the heat-sensitive layer (printing surface), is discharged from the print cassette 201 through the tape discharging part 204. Hereinafter, to be distinguished from the print tape 211, the print tape 205 will be referred to as a character-printed tape 205.

Fig. 14 is a cross-sectional view of the character-printed tape 205 taken along a line C-C shown in Fig. 16. As shown in Fig. 14, the character-printed tape 205 is composed of the print tape 211. The print tape 211 comprises a heat-sensitive layer 232 forming the printing surface on the first side (the upper side in Fig. 14) of a base film 231 made of the PET. The print tape 211 also comprises an overcoating layer 236 on a first side (the upper side in Fig. 14) of the heat-sensitive layer 232, over an intermediate layer 235 which is interposed between the overcoating layer 236 and the heat-sensitive layer 232. The overcoating layer 236 develops toughness and endurance of the character-printed tape 205, and prevents a color change on the heat-sensitive layer. The intermediate layer 235 is for preventing the color change of the heat-sensitive layer 232 while the overcoating layer 236 is coated thereover in the manufacture of the print tape 211, and for securing an intimate contact between the overcoating layer 236 and the heat-sensitive layer 232. The print tape 211 further comprises an adhesive layer 233 which is formed with the adhesive coating the second side (the lower side in Fig. 14) surface of the base film 231, to which a release paper 234 is adhered. The color change is occurred on the heat-sensitive layer 232, which produces the character-printed tape 205. Accordingly, the heat-sensitive layer 232, the intermediate layer 235 and the overcoating layer 236 compose a printing layer 242. Further, the character-printed tape 205, from which the release paper 234 is removed so that the adhesive layer 233 is exposed, can be adhered to the adherend.

Noted that the adhesive making up the adhesive layer 233 includes a copolymer as a main material, made by the copolymerization of monomers of any series such as an acrylic series, a rubber series and a silicone series. The adhesive can be made with or without various kinds of additives (such as a crosslinking agent, a tackifier, a softner, a fixture, a pigment and the like). However, the adhesive, of which the copolymer and the additives contain no unsaturated carboxylic acid (such as an acrylic acid, a methacrylic acid, an itaconic acid and a maleic acid), is adopted (hereinafter, referred to as an "acid-free" adhesive).

Incidentally, the print cassette 201 is set in a cassette mount of a tape printer (not shown) to produce the character-printed tape 205 (the print tape 211 on which characters are generated by the color change on the heat-sensitive layer 232 with the thermal head of the tape printer). In the cassette mount of the tape printer, there is provided a cutter device (not shown) having a cutter to cut the character-printed tape 205 discharged from the print cassette 201 through the tape discharging part 204. The structure of the print cassette 201 as explained with reference to Fig. 15 and the tape printer in which the print cassette 201 is installed to produce the character-printed tape 205 have been publicly known, so the detailed explanation of the process for producing the character-printed tape 205 with the print cassette 201 and the tape printer is omitted.

As described in detail above, in the print cassette 201 of the third embodiment, the print tape 211 in a wound state is provided as shown in Fig. 16. The print tape 211, from which the release paper 234 is removed so that the adhesive layer 233 is exposed, can be adhered to the adherend as shown in Fig. 14. Regarding this point, the adhesive layer 233 which is brought into close contact with the adherend is made of the acid-free (containing no unsaturated carboxylic acid), thereby preventing the corrosion on the adhered surface of the adherend such as pictures and copper plates to which the print tape 211 is stuck.

The present invention may be embodied in other specific forms without departing from the essential characteristics thereof. For instance, the material of the base film 131 of the print tape 111 is not limited to the PET. Materials such as paper and cloth which are suitable for scrapbooking can be also used. When the print tape 111 is made of the PET, the thickness thereof is preferably 70 to 100 µm for more enjoyable texture, or 20 to 50 µm for more indistinctive texture.

While the presently preferred embodiment has been shown and described, it is to be understood that this invention is for the purpose of illustration and that various changes and modifications may be made without departing from the scope of the invention as set forth in the appended claims.

## Claims

1. A print tape (5) comprising:
a base film (31);
a laminate film (13) provided on a first side of the base film (31) as a printing surface;
a first-sided adhesive layer (32) which is applied to the first side of the base film (31), being formed with a first-sided adhesive;
a release paper (34) which is adhered to a second side of the base film (31); and
a second-sided adhesive layer (33) which is applied between the base film (31) and the release paper (34) being formed with a second-sided adhesive,
**characterized in that** the second-sided adhesive forming the second-sided adhesive layer (33) is acid-free.

2. The print tape (5) according to claim 1,
wherein a value of a creep adhesion force of the second-sided adhesive forming the second-sided adhesive layer (33) against a PET film is within a range of 1 to 10 N/20mm, and is less than or equal to a value of the creep adhesion force of the first-sided adhesive forming the first-sided adhesive layer (32) against the PET film.

3. The print tape (5) according to claim 1,
wherein an adhesive-coated thickness of the second-sided adhesive layer (33) is within a range of 10 to 50*µ*m.

4. A print cassette (1), comprising the print tape (5) according to any of claims 1 to 3.

## Patentansprüche

1. Bedruckbares Band (5), aufweisend:
ein Basisband (31);
ein Laminatband (13), das auf einer ersten Seite des Basisbands (31) als eine bedruckbare Oberfläche vorgesehen ist;
eine mit einem erstseitigen Klebstoff ausgebildete erstseitige Klebeschicht (32), die an der ersten Seite des Basisbands (31) angebracht ist;
ein Abziehpapier (34), das an eine zweite Seite des Basisbands (31) geklebt ist; und
eine mit einem zweitseitigen Klebstoff ausgebildete zweitseitige Klebeschicht (33), die zwischen dem Basisband (31) und dem Abziehpapier (34) angebracht ist,
**dadurch gekennzeichnet, dass** der zweitseitige Klebstoff, der die zweitseitige Klebeschicht (33) ausbildet, frei von Säure ist.

2. Bedruckbares Band (5) gemäß Anspruch 1,
wobei ein Wert einer Fließklebekraft des zweitseitigen Klebstoffs, der die zweitseitige Klebeschicht (33) ausbildet, gegenüber einem PET-Film innerhalb eines Bereichs von 1 bis 10 N/20mm liegt, und kleiner oder gleich einem Wert der Fließklebekraft des erstseitigen Klebstoffs, der die erstseitige Klebeschicht (32) ausbildet, gegenüber dem PET-Film ist.

3. Bedruckbares Band (5) gemäß Anspruch 1,
wobei eine mit Klebstoff bedeckte Dicke der zweitseitigen Klebeschicht (33) innerhalb eines Bereichs von 10 bis 50 µm liegt.

4. Druckkassette (1), die das bedruckbare Band (5) gemäß einem der Ansprüche 1 bis 3 aufweist.

## Revendications

1. Bande d'impression (5) comprenant :
un film de base (31) ;
un film laminé (13) formé sur une première face du film de base (31) en tant que surface d'impression ;
une couche adhésive de première face (32) qui est appliquée sur la première face du film de base (31), formée avec un adhésif de première face ;
une feuille de séparation (34) qui est collée sur une seconde face du film de base (31) ; et
une couche adhésive de seconde face (33), qui est appliquée entre le film de base (31) et la feuille de séparation (34), formée avec un adhésif de seconde face,
**caractérisée en ce que** l'adhésif de seconde face formant la couche adhésive de seconde face (33) est exempt d'acide.

2. Bande d'impression (5) selon la revendication 1,
dans laquelle une valeur d'un effort d'adhérence en fluage de l'adhésif de seconde face formant la couche adhésive de seconde face (33) contre un film de PET est comprise dans une plage de 1 à 10 N/20 mm, et est inférieure ou égale à une valeur de l'effort d'adhérence en fluage de l'adhésif de première face formant la couche adhésive de première face (32) contre le film de PET.

3. Bande d'impression (5) selon la revendication 1,
dans laquelle une épaisseur de revêtement adhésif de la couche adhésive de seconde face (33) est comprise dans une plage du 10 à 50 µm.

4. Cassette d'impression (1), comprenant la bande d'impression (5) selon l'une quelconque des revendications 1 à 3.
